# EUROPÄISCHE PATENTSCHRIFT

(11) **EP 1 387 955 B1**
(45) Veröffentlichungstag und Bekanntmachung des Hinweises auf die Patenterteilung: **24.12.2008**
(21) Anmeldenummer: 02745229.1
(22) Anmeldetag: 12.04.2002
(51) Int. Cl.: F03D 9/00, H02K 5/24

(54) **TRAGKONSTRUKTION FÜR DEN STATOR EINES RINGGENERATORS EINER WINDTURBINE**
SUPPORTING CONSTRUCTION FOR THE STATOR OF A RING GENERATOR OF A WIND TURBINE
STRUCTURE DE SUPPORT POUR LE STATOR D'UN GENERATEUR ANNULAIRE D'UNE EOLIENNE

(30) Priorität: 03.05.2001 DE 10121647; 12.06.2001 DE 10128438
(43) Veröffentlichungstag der Anmeldung: 11.02.2004
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2002/004108
(87) Internationale Veröffentlichungsnummer: WO 2002/090769

(56) Entgegenhaltungen:
- DE-A- 2 708 411
- DE-A- 10 033 233
- FR-A- 766 642
- US-A- 3 395 296
- US-A- 4 850 258
- US-A- 5 844 341

## Beschreibung

Die vorliegende Erfindung betrifft eine Windenergieanlage mit einer Tragkonstruktion für den Stator eines Ringgenerators, wobei die Tragkonstruktion mehrere Tragarme aufweist. Eine Tragkonstruktion mit axial verlaufenden Tragarmen ist aus der Druckschrift US-A-5 844 341 bekannt.

Solche Windenergieanlagen sind seit langer Zeit bekannt und werden z.B. von der Firma Enercon unter den Typenbezeichnungen E40, E-58 oder E-66 hergestellt und vertrieben.

Beim Betrieb solcher Windenergieanlagen treten stets Schallemissionen auf, die zumindest in der näheren Umgebung der Windenergieanlage als störend empfunden werden können.

Aufgabe der vorliegenden Erfindung ist es daher, die von einer Windenergieanlage nach dem Oberbegriff des Anspruches ausgehenden Schallemissionen zu verringern.

Diese Aufgabe wird gelöst mit einer Windenergieanlage mit den Merkmalen nach Anspruch 1. Vorteilhafte Weiterbildungen sind in den Unteransprüchen beschrieben.

Während sich bei einer Tragkonstruktion mit einer geraden Anzahl von Tragarmen, die gleichmäßig in Umfangsrichtung des Ringgenerators beabstandet sind, bestimmte Frequenzen herausbilden können, die dann als störend empfundene Schallwellen wahrgenommen werden, werden solche Schallemissionen bei einer ungeraden Anzahl von Tragarmen und/oder einer ungleichmäßigen Beabstandung der Tragarme gänzlich unterdrückt oder vermindert.

Die Erfindung wird anhand der Zeichnungen näher erläutert. Dabei zeigen:
Figur 1 eine vereinfachte Darstellung des Standes der Technik;
Figur 2 eine alternative Darstellungsform des Standes der Technik;
Figur 3 ein Ausführungsbeispiel einer erfindungsgemäßen Tragkonstruktion; und
Figur 4 eine alternative Darstellung der Verhältnisse der in Figur 3 gezeigten, efindungsgemäßen Ausführungsform.

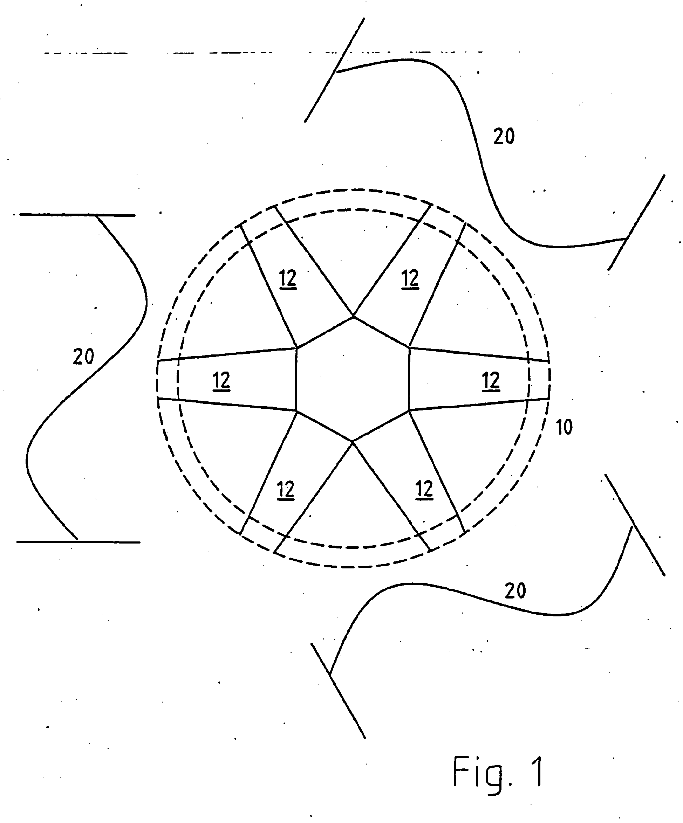

Figur 1 zeigt eine Tragkonstruktion mit sechs radial verlaufenden Tragarmen 12, deren äußere Abschnitte mit gleichem Abstand zueinander angeordnet sind. An diesen äußeren Abschnitten ist der Stator 10 eines Ringgenerators befestigt. Dieser Stator 10 ist in der Figur durch gestrichelte Linien angedeutet.

Bei dieser Ausbildung einer Tragkonstruktion können sich Ober den Umfang verteilt zwischen den Tragarmen 12 Schwingungen 20 ausbilden. Durch den gleichförmigen Abstand zwischen den Tragarmen 12 und die damit jeweils übereinstimmende Wellenlänge der Schwingungen 20 kann es zu einem als "Trommeleffekt" bezeichneten Effekt kommen. Entscheidender für die Schallemission sind jedoch die Ausbildung von Eigenmoden (Eigenformen), die sich bei Anregung mit einer bestimmten Schwingung ausbilden können. Diese Eigenmoden sind regelmäßig von der Geometrie des gesamten Objektes abhängig bzw. bestimmt.

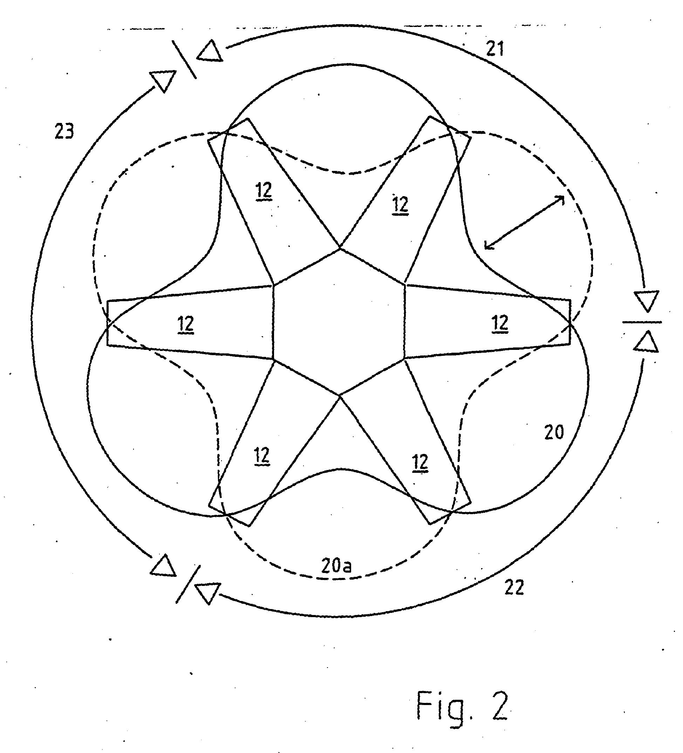

Figur 2 zeigt in einer alternativen Darstellung die Situation bei der bekannten Tragkonstruktion. In dieser Figur sind die Schwingungen 20 zusammenhängend über den Umfang der Tragkonstruktion mit den Tragarmen 12 dargestellt. Um eine halbe Periode versetzt sind die Schwingungen in einer gestrichelten Linie dargestellt und mit dem Bezugszeichen 20a gekennzeichnet.

Betrachtet man einen beliebigen Punkt auf dem Umfang der Tragkonstruktion (bzw. ein Luftmolekül an dieser Stelle), so erkennt man, dass sich dort je nach Phasenlage der Schwingungen 20, 20a dessen Position entlang einer mit dem Pfeil 30 angedeuteten Linie ändert. Hier entsteht also für diesen Punkt eine bidirektionale Schwingung, wie bei einem Trommelfell.

In dieser Figur sind über den Umfang verteilt drei vollständige Perioden einer Schwingung dargestellt, so dass stets drei jeweils phasengleiche Punkte mit gleichem Betrag und in gleicher Richtung schwingen. Diese Schwingungen führen zu einer regelrechten "Pumpbewegung" in dem Stator des Generators, die als Schall wahrgenommen wird.

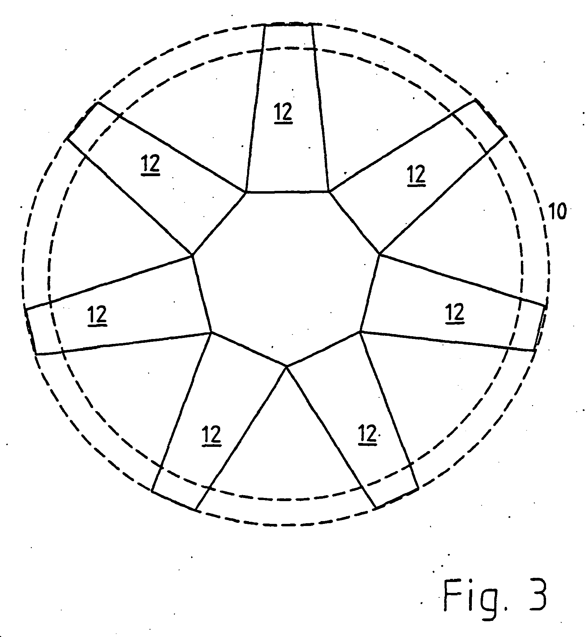

Figur 3 zeigt vereinfacht eine erfindungsgemäße Tragkonstruktion. Diese weist eine ungerade Anzahl von Tragarmen 12 auf (in diesem Fall sieben). Natürlich kann die Aufgabe der vorliegenden Erfindung auch mit fünf Tragarmen gelöst werden, aus Gründen der erforderlichen Festigkeit der Tragkonstruktion werden bevorzugt wenigstens sieben Tragarme 12 verwendet. In dieser Figur ist wiederum der Stator 10 des Ringgenerators mit gestrichelten Linien angedeutet.

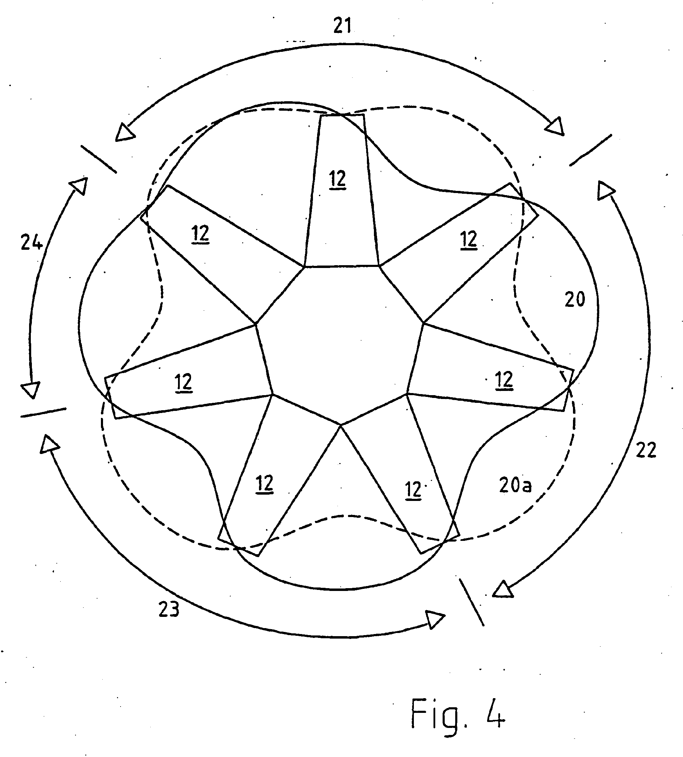

Figur 4 zeigt, anlog zu Figur 2, eine Darstellung der Schwingungen, die über den Umfang der Tragkonstruktion miteinander verbunden sind. Dabei ist mit dem Bezugszeichen 20 wiederum eine Folge von Schwingungs-Abläufen gekennzeichnet, während das Bezugszeichen 20a ebenfalls diese Schwingungs-Abläufe darstellt, jedoch um eine halbe Periode gegenüber den mit 20 bezeichneten Schwingungen versetzt.

Die mit 20 bezeichneten Schwingungen zeigen in den Abschnitten 21, 22, 23 drei vollständige Schwingungsperioden, während in dem Abschnitt 24 nur eine halbe Periode auftritt.

Durch diesen Schwingungsveriauf sind zwei positive Halbwellen (Halb-Perioden), nämlich am Beginn von Abschnitt 21 und in Abschnitt 24, einander direkt benachbart, so dass entsprechend der Trommeleffekt wenigstens an dieser Stelle nicht auftreten kann und somit in seiner gesamten Wirkung wenigstens verringert wird.

Wenn ein mechanisches Gebilde, wie beispielsweise die Tragkonstruktion eines Generators eine unerwünschte Schallemission erzeugt, so lässt sich dies regelmäßig damit erklären, dass unter der Einwirkung von Schwingungen die gesamte Tragkonstruktion sogenannte Resonanzen oder auch "Eigenmoden" (Eigenformen) ausbildet. Diese "Eigenmoden" sind zunächst von der Geometrie des gesamten Objektes abhängig, ferner besteht auch eine bestimmte Frequenzabhängigkeit verschiedener Eigenmoden.

Mit der erfindungsgemäßen Ausführung der Tragarme des Status wird der Frequenzverlauf dieses Bauteils so ausgelegt, dass Frequenzen, bei denen besonders schallemittierende Eigenmoden (Eigenformen) sich ausbilden könnten, möglichst vermieden werden.

## Patentansprüche

1. Windenergieanlage mit einem Generator, bevorzugt einem Ringgenerator, bestehend aus einem Läufer und einem Stator, welcher eine Aufnahme für Statorwicklungen aufweist, wobei der Stator von einer Tragkonstruktion gehalten wird, welche mehrere radial verlaufende Tragarme aufweist und wobei eine ungerade Anzahl von Tragarmen (12) ausgebildet sind und/oder die Tragarme wenigstens zum Teil ungleichmäßig beabstandet sind.

2. Windenergieanlage nach Anspruch 1,
**dadurch gekennzeichnet, dass** die Tragkonstruktion für den Stator sieben Tragarme aufweist.

3. Windenergieanlage nach einem der vorstehenden Ansprüche, wobei der Frequenzverlauf der Tragarme so ausgelegt ist, dass Frequenzen, bei denen besonders schallemittierende Eigenmoden sich ausbilden könnten, möglichst vermieden werden, so dass die Tragkonstruktion so gestaltet ist, dass sie im Wesentlichen keine oder nur geringe schallemittierende Eigenmoden (Eigenformen) im normalen Betriebsbereich ausbildet.

## Claims

1. Wind power installation having a generator, preferably a ring generator, consisting of a rotor and a stator having a receptacle for stator windings, wherein the stator is held by a support structure that has a plurality of radially extending support arms and wherein an odd number of support arms (12) is constructed and/or at least some of the support arms are irregularly spaced.

2. Wind power installation according to claim 1,
**characterised in that** the support structure for the stator has seven support arms.

3. Wind power installation according to one of the preceding claims, wherein the frequency response characteristic of the support arms is such that frequencies at which particularly sound-emitting natural modes could develop are as far as possible avoided, with the result that the support structure is of a form such that it develops substantially no or only negligible sound-emitting natural modes (natural forms) in the normal operating range.

## Revendications

1. Installation d'énergie éolienne, comportant un générateur, de préférence un générateur annulaire, constitué par un rotor et un stator qui présente un logement pour des enroulements de stator, le stator étant retenu par une construction portante qui présente plusieurs bras porteurs s'étendant radialement, dans laquelle est réalisé et un nombre impair de bras porteurs (12) et/ou les bras porteurs sont espacés au moins en partie de manière irrégulière.

2. Installation d'énergie éolienne selon la revendication 1, **caractérisé en ce que** la construction portante pour le stator présente sept bras.

3. Installation d'énergie selon l'une quelconque des revendications précédentes, dans laquelle l'allure de fréquence des bras porteurs est conçue de telle sorte que des fréquences avec lesquelles des modes spécifiques en particulier émetteurs de sons pourraient se former, sont si possible évitées, de telle sorte que la construction portante est configurée de manière à ce qu'elle ne réalise dans la plage de fonctionnement normal aucun mode spécifique ou que des modes spécifiques faiblement émetteurs de sons (formes spécifiques).
